Europäisches Patentamt

European Patent Office

Office européen des brevets

(11) Publication number: **0 074 936**
**B1**

(12) **EUROPEAN PATENT SPECIFICATION**

(45) Date of publication of patent specification: **30.04.86**

(51) Int. Cl.⁴: **B 65 D 85/78**

(21) Application number: **82830233.1**

(22) Date of filing: **15.09.82**

(54) **A squeezable container, in particular for ice-cream and the like.**

(30) Priority: **15.09.81 IT 3600981 U**

(43) Date of publication of application:
**23.03.83 Bulletin 83/12**

(45) Publication of the grant of the patent:
**30.04.86 Bulletin 86/18**

(84) Designated Contracting States:
**AT BE CH DE FR GB LI NL SE**

(56) References cited:
**FR-A-1 223 345**
**FR-E- 76 553**
**JP-A-56 109 908**
**US-A- 797 775**

(73) Proprietor: **Cartotecnica Seda di Salvatore D'Amato s.a.s.**
**Via Rettifilo al Bravo 84**
**I-80022 Arzano Napoli (IT)**

(72) Inventor: **D'Amato, Antonio c/o Cartotecnica Seda di**
**Salvatore D'Amato s.a.s. Via Rettifilo al Bravo 84**
**I-80022 Arzano Napoli (IT)**

(74) Representative: **Patentanwälte Grünecker, Dr. Kinkeldey, Dr. Stockmair, Dr. Schumann, Jakob Dr. Bezold, Meister, Hilgers, Dr. Meyer-Plath**
**Maximilianstrasse 58**
**D-8000 München 22 (DE)**

Courier Press, Leamington Spa, England.

## Description

The invention refers to a container, in particular for ice-cream and the like, capable of being manually deformed by squeezing for emitting its contents.

In the retail of ice-cream and the like, wafers of a mainly conical form or vessels of suitably treated plastic or cardboard are generally used for holding the ice cream.

However, such known containers are not free from inconveniences of a practical and functional order: as a matter of fact, the wafers, ordinarily named cornets, are considerably brittle and consequently apt to break or slit with consequent loss or dripping of the ice-cream substance, while the vessels, although being of a more reliable type of container, have the disadvantage of being of considerably encumbrance, and do in any case need the complement of suitable spoonlets for the withdrawal of the contents.

Ice-cream, especially water ice is being sold on a stick. It is surrounded by a cover, which is opened and taken away for the consumption.

The consumer holds the stick in one hand and licks the ice-cream with his tongue.

The ice-cream on the stick is very handy for children but, however, has the disadvantage that the melting ice has to be consumed constantly otherwise it will drip down on the hand and spill on clothing or on the floor.

A squeezable container, of the kind described in the preamble of claim 1, is known from FR—A—76 553. It comprises a tubular body with a circular, square or rectangular cross section, which basically remains constant from its open end to its flattened end portion. The container consists of a relatively flexible and relatively stiff material, such is waterproof paper or plastic material and has plies on two parallel sides, in order to create a defined deformation when it is squeezed.

Due to its shape, the container may only take up creamy material, like yoghurt, jam, or compressible ice-cream, like soft ice, since otherwise the contents may not be expelled easily. Especially deep frozen ice-cream, which usually is not compressible may not be readily consumed.

The US—A—797 775 shows a squeezable container for water ice, comprising a tubular body of a relatively flexible material. The cartridge is formed of any heat conducting material, such as heavy tin foil, soft gelatine or sheetlead. It includes a cylindrical grip part for holding the squeezable container. The upper end of it is open, whereas the lower end is closed by means of a flattened end portion which is designed as a bottom part.

This container is not easy to use. In order to consume the water ice, the whole ice block has to be heated up by the warmth of the hand in order to prepare a lubricated layer between the ice and the container. When the consumer has warmed up the container as much as is necessary in order to produce the just mentioned lubricated layer, then he needs to squeeze out the cylindrical ice block out of the cylindrical container. If he is just pressing together the container, he is not able to push out the ice block from the container since no defined force component into the direction of the open end of the container is generated.

If the consumer tries to push out the ice block from the closed end, he first has to push in the ball like end, which may be reinforced by the plies of the bottom part. As a matter of fact the consumer has only one possibility of forcing the ice block out of the container, namely by turning it upside down. By doing so, the consumer however has to pay attention that the ice block does not fall out from the container. Again the problem with the melting water ice remains.

Furthermore the known container is not easy to produce and has the disadvantage that it may not be stacked.

From the Japanese Utility model 56-109908 a further cylindrical container is known, the package material of which is formed as an inverted hollow truncated cone. The container may be made from any film- or sheet like material which is adherable by heat-sealing, pressing or other means, such as paper, plastic, glass, etc.

Such a container has an apex angle determined so that the inner diameter of a first container is greater than the outer diameter of a second container when the second container is stacked on the first container. Stacked containers may be separated from each other without any special difficulty, since the bottom parts of the containers are specifically constructed in order to simplify the separation.

In the Japanese utility model it is not disclosed for what purpose the container shall be used. It is neither taught to squeeze the container for the consumption of its contents.

It is an object of the invention to produce a squeezable container in particular for ice-cream and the like, which to a particular capacity of resistance adds a surprising function for emitting the contents.

This object is solved in that said tubular body has the shape of a frustum of a cone, the tapering end portion thereof which is designed as the bottom part forms a stiffened grip part, and in that at the open end of said frustoconical body a stiffening hem is formed.

The container according to the invention provides a major advantage in the consumption of ice-cream and the like. Due to its shape the container may be held and used in one hand. If the ice-cream is not consumed right away, the consumer may hold the container at its bottom part, which forms the sealed, flattened and stiffened grip part.

The ice-cream being also provided with a frustoconical shape is constantly or stepwise emerging from the container when squeezing and can be licked off by the tongue of the consumer. Molten ice-cream is dripping back into the container so that spilling is avoided.

The flexible and nevertheless stiff material of the container of the invention provides the possibility that the block of ice-cream may be pushed out of the container for consumption and is able to disappear in the container again in order to be conserved there for the next step of consumption. The block of ice-cream therefore may be pressed out from the container and return into it several times according to the velocity of consumption.

Molten ice-cream is collected on the bottom of the container and may be drunk after the ice has disappeared.

The container according to the invention however, is not only advantageous in its use, it is also simple in its production. It may be formed from waterproof paper or plastic material and may be safely sealed at its flattened and stiffened grip part. The containers may be stacked together in order to minimize the costs of transport and storage.

The present invention will be better illustrated herebelow by the description of a preferred embodiment thereof, given as an exemplifying and not limiting form, with reference to the only annexed drawing, in which:

figure 1 is a longitudinal section view of the initial tubular body of the squeezable container in question; and

figure 2 is a longitudinal section view of the squeezable container in question, completed as starting from the tubular body of figure 1.

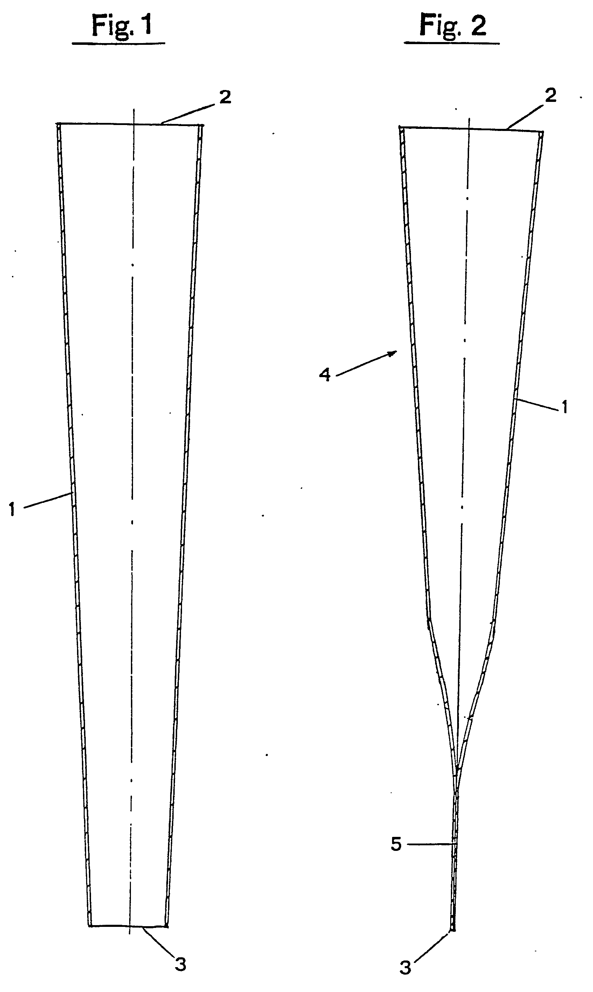

Referring to figure 1, with 1 there is designated the initial tubular body for obtaining the squeezable container of the invention.

In the present example of embodyment the tubular body 1 is shaped as an elongated frustum of cone with a larger base 2 and a narrower base 3 and it can be obtained as one piece as well as from a flat form in which case an overlapping of the longitudinal edges with a consequent sealing of same will obviously be present.

The tubular body 1 consists of a relatively stiff and flexible material so as to allow a suitable resistance and at the same time an easy manual squeezing of the tubular body 1. There may be used, for example, plastic laminates of a quite reduced thickness or a paper material subjected to particular waterproofing and stiffening treatments.

In order to obtain the container of the invention, generally indicated with 4 in figure 2, the base end 3 is flattened and sealed, preferably performing such operations for a certain stretch of the tubular body 1 starting from said narrower base 3 in such a way as to obtain a flat grip part 5 of a suitable rigidity.

The so shaped container of the invention may at last be finished with a hem (not shown) that stiffens the upper opening, that is the larger base 2 of the tubular body 1, plying the rim of said opening one or several times towards the outside, so as to be also apt to permit the application of a lid.

For using the container in question, filled with ice-cream or the like, it is sufficient to press with one hand the tubular body 1 so as to bring about a deformation by squeezing which forces the ice-cream or the like to come out from the upper aperture permitting the consumer to easily taste the contents.

Obviously several variations may be brought to the container of the invention as described in the example of embodiment above. As a matter of fact, it is for example possible to use any other suitable form for the tubular body 1, different from the frustum of cone illustrated in figure 1; the sealing line for obtaining the tubular body from a flat form does not necessarily have to be a longitudinal line but can follow a differentiated course, for example a helicoidal one, with respect to the shape of the starting flat form, out of aesthetic reasons as well as of convenience.

**Claims**

1. Squeezable container for ice-cream and the like, comprising a tubular body (1) of a relatively flexible and relatively stiff material, such as waterproof paper or plastic material, said body including a grip part for holding the container and being open at one end (2) and closed at the other end (3) by means of a flattened end portion which is designed as a sealed and flattened bottom part characterized in that said tubular body (1) has the shape of a frustum of a cone, the tapering end portion (3) thereof which is designed as the bottom part (5) forms a stiffened grip part (5), and in that at the open end (2) of said frustoconical body a stiffening hem is formed.

2. A squeezable container according to claim 1, characterized in that the stiffening hem is formed by plying the rim of said open end (2) outwardly one or several times.

3. Squeezable container according to claims 1 or 2, characterized in that said container is provided with a lid for closing said open end (2).

**Revendications**

1. Conteneur compressible (4) pour crême glacée ou denrée analogue formé d'un corps tubulaire (1) en matériau relativement flexible et relativement rigide tel que du papier imperméabilisé ou de la matière plastique, ledit corps tubulaire comportant une partie de préhension (5) utilisable pour tenir ledit conteneur et étant ouvert à une extrémité (2) et fermé à l'autre extrémité (3) à l'aide d'une partie extrême aplatie (5) conçue sous la forme d'une partie inférieure rendue étanche et aplatie, caractérisé en ce que le corps tubulaire (1) a la forme d'un tronc de cône dont l'extrémité voisine de la petite base (3), qui est conçue comme partie inférieure (5) du conteneur (4), forme une partie de préhension rigidifiée (5) et qu'un bord renforcé de rigidification est formé à l'extrémité ouverte (2) dudit corps tronconique.

2. Conteneur compressible selon la revendication 1, caractérisé en ce que le bord renforcé de rigidification est formé en repliant le bord de l'extrémité ouverte (2) vers l'extérieur, une ou plusieurs fois.

3. Conteneur compressible selon la revendication 1 ou 2, caractérisé en ce que ledit conteneur est muni d'un couvercle fermant l'extrémité ouverte (2).

## Patentansprüche

1. Zusammenquetschbarer Behälter für Speiseeis und dergl. mit einem rohrförmigen Körper (1) aus einem relativ flexiblen und relativ steifen Werkstoff, z.B. wasserfestem Papier oder Kunststoff, welcher ein Griffteil zum Halten des Behälters aufweist, an einem Ende (2) offen ist und am anderen Ende (3) durch ein als abgedichtetes und flachgedrücktes Bodenteil ausgebildetes, flaches Endstück verschlossen ist, dadurch gekennzeichnet, daß der rohrförmige Körper (1) die Form eines Kegelstumpfs hat, dessen als das Bodenteil (5) ausgebildetes verjüngtes Endstück (3) ein versteiftes Griffteil (5) bildet, und daß am offenen Ende (2) des kegelstumpfförmigen Körpers ein versteifender Saum ausgebildet ist.

2. Zusammenquetschbarer Behälter nach Anspruch 1, dadurch gekennzeichnet, daß der versteifende Saum durch einfaches oder mehrfaches Falten des Randes des offenen Endes (2) nach außen gebildet ist.

3. Zusammenquetschbarer Behälter nach Ansprüchen 1 oder 2, dadurch gekennzeichnet, der Behälter mit einem Deckel zum Verschließen des offenen Endes (2) versehen ist.

0 074 936

Fig. 1

Fig. 2

1